# EUROPÄISCHE PATENTSCHRIFT

(11) **EP 0 793 770 B1**
(45) Veröffentlichungstag und Bekanntmachung des Hinweises auf die Patenterteilung: **19.07.2000**
(21) Anmeldenummer: 95938457.9
(22) Anmeldetag: 21.11.1995
(51) Int. Cl.: F01N 7/00, F01N 9/00

(54) **ANORDNUNG ZUR ÜBERWACHUNG DER FUNKTIONSFÄHIGKEIT VON KATALYSATOREN**
DEVICE FOR MONITORING THE OPERATABILITY OF CATALYTIC CONVERTERS
DISPOSITIF UTILISE POUR SURVEILLER L'APTITUDE AU FONCTIONNEMENT DE CATALYSEURS

(30) Priorität: 22.11.1994 DE 4441432
(43) Veröffentlichungstag der Anmeldung: 10.09.1997
(60) Teilanmeldung: 99124104.3
(73) Patentinhaber: Heraeus Electro-Nite International N.V., 3530 Houthalen (BE)
(72) Erfinder: HÄFELE, Edelbert, D-76228 Karlsruhe (DE)
(74) Vertreter: Kühn, Hans-Christian
(86) Internationale Anmeldenummer: EP9504584
(87) Internationale Veröffentlichungsnummer: WO9616257

(56) Entgegenhaltungen:
- EP-A- 0 609 527
- DE-A- 4 039 429
- DE-A- 4 100 397
- DE-A- 4 211 116
- JP-A- 4 060 106
- US-A- 5 060 474
- US-A- 5 179 833
- US-A- 5 265 417

## Beschreibung

Die Erfindung betrifft eine Anordnung zur Überwachung der Funktionsfähigkeit von Katalysatoren in Entgiftungsanlagen für Abgas.

Solche Anordnungen sind insbesondere für das Abgas von Verbrennungsmotoren in einer Vielzahl von Ausführungsformen bekannt (z. B. DE 23 04 464 C2).

Diese bekannten Anordnungen bergen die Nachteile in sich, dass sie nicht hinreichend zuverlässig die Funktionsfähigkeit überwachen können, da eine indirekte Messung entweder mit zwei Lambda-Sonden (DE 40 39 429) oder mittels Temperatursonden erfolgt. Insbesondere ist eine zuverlässige Feststellung der Funktionsfähigkeit bei gealterten Katalysatoren aufgrund der nicht mehr mit der Sauerstoffspeicherkapazität korrelierenden Umsatzrate an Kohlenwasserstoffen und anderen Schadstoffen nicht möglich.

Es ist außerdem eine Vorrichtung bekannt (DE 42 11 116), mit der zur Feststellung der Funktionsfähigkeit des Katalysators der Lambdawert eines Gemisches so moduliert wird, dass sich periodisch ein Sauerstoffüberschuss mit einem Sauerstoffmangel abwechseln. Anhand der Sprungreaktion einer in Strömungsrichtung hinter dem Katalysator angeordneten Lambdasonde wird die Funktionstüchtigkeit bzw. das Maß für die Konvertierungsfähigkeit des Katalysators detektiert. Nachteilig ist auch hier die indirekte Ermittlung einer Aussage über die Funktion des Katalysators.

Aus EP-A 0 530 655 ist ein ähnliches Verfahren zur Regelung eines Ottomotors bekannt. Bei der Regeleinrichtung sind mindestens zwei verschiedene Sensoren in einer Sensoreinheit nach dem Katalysator angeordnet. Mit der Sensoreinheit werden die unmittelbar aus dem Motor kommenden Gasbestandteile nach Durchlauf des Gases durch den Katalysator ausgewertet.

Aus EP-A 0 609 527 ist es bekannt, den Abgasstrom gegenüber dem normalen Betriebszustand gezielt zu ändern, diese Änderung zu erfassen und mit einem gespeicherten Parameter zu vergleichen. Als Messsonden werden hierfür Temperatursensoren oder Sauerstoffsensoren verwendet. Bei dem Verfahren wird ein Störzustand des Motors hervorgerufen, der zu einer Verschlechterung der Emission von Schadstoffen führt.

Der Erfindung liegt deshalb die Aufgabe zugrunde, eine eingangs charakterisierte Anordnung zuverlässiger sowie schnell reagierend auszubilden.

Diese Aufgabe wird erfindungsgemäß durch die Merkmale des Anspruchs 1 gelöst.

So wird also keine Lambda-Sonde oder ein Temperatursensor zur Überwachung, sondern ein Schadstoffsensor in Strömungsrichtung des Abgases hinter oder in dem Katalysator angeordnet. Ferner wird eine schnelle, definierte Änderung des Lambda-Wertes und/oder des Sauerstoffgehaltes im Abgas durchgeführt durch definiertes Abmagern, beispielsweise des Abgases von Verbrennungsmotoren nach einem bestimmten Schema oder Zyklus und das elektrische Ausgangssignal des Schadstoffsensors mit einem gespeicherten, der definierten Änderung des Lambda-Wertes entsprechenden Werteprofil verglichen. Liegt das elektrische Ausgangssignal innerhalb eines gewissen Toleranzbereiches zu dem gespeicherten Werteprofil, so wird davon ausgegangen, dass sich sowohl der Katalysator als auch die Lambda-Sonden in einem funktionierenden Zustand befinden. Liegen die Werte außerhalb eines Toleranzbereiches kann hierdurch mittelbar auf einen Fehler entweder des Katalysators oder aber der Lambda-Sonden geschlossen werden. Es kann die Funktion des Katalysators und/oder jene des Schadstoffsensors selbst überprüft werden.

Es ist mit Vorteil auch möglich, den Schadstoffsensor zwischen zwei oder mehreren einzelnen Katalysatoren anzuordnen, weil dann die definierte Änderung höhere Werte der Emissionsspitzen erreicht, diese vergleichsweise höheren Konzentrationen jedoch in dem nachfolgenden Katalysator abgebaut werden können, so dass die Feststellung der Funktionsfähigkeit zu keinem höheren Schadstoffausstoß führt.

Zweckmäßige Ausgestaltungen und Weiterbildungen der Erfindung sind in den Unteransprüchen gekennzeichnet.

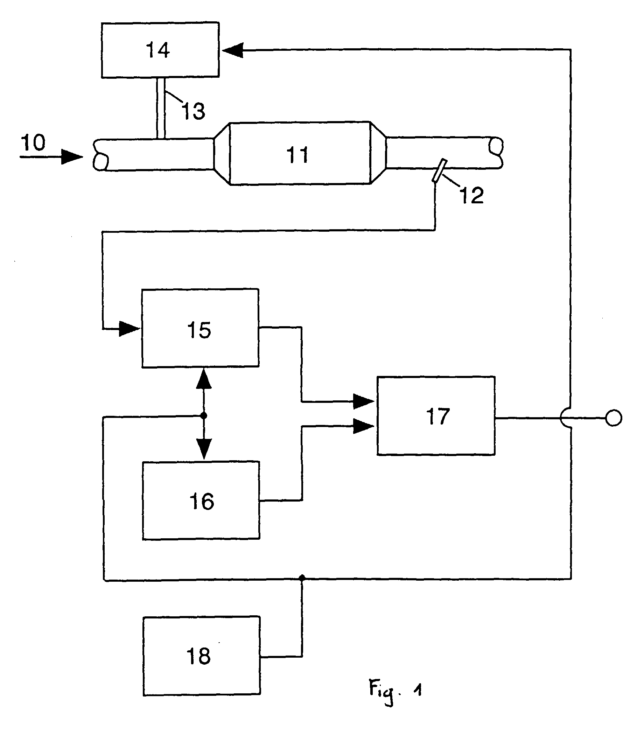

Ein bevorzugtes Ausführungsbeispiel wird nachfolgend unter Bezugnahme auf die Zeichnung näher erläutert, die ein schematisches Diagramm zeigt.

Zunächst sei mit dem Richtungspfeil 10 das strömende Abgas aus einem Verbrennungsmotor eines Kraftfahrzeuges bezeichnet, das durch einen insgesamt mit 11 bezeichneten Katalysator abfließt. Mit 12 ist ein in Strömungsrichtung 10 des Abgases hinter dem Katalysator 11 angeordneter Schadstoffsensor bezeichnet, der auf Kohlenwasserstoffe HC anspricht. Vor dem Katalysator 11 und dem Schadstoffsensor 12 ist eine Leitung 13 vorgesehen, über die Luft oder reiner Sauerstoff in definiertem Maße gesteuert, beispielsweise über eine Sekundärluftpumpe, von der insgesamt mit 14 bezeichneten Vorrichtung zuführbar ist.

Der Ausgang des Schadstoffsensors 12 ist elektrisch mit einer Auswerteschaltung 15 verbunden. Dessen Ausgang sowie der Ausgang eines Speichers 16 sind mit den Eingängen einer insgesamt mit 17 bezeichneten Schaltung verbunden, deren Ausgangssignal Auskunft über die Funktionsfähigkeit des Katalysators 11 oder der (nicht gezeigten) Lambda-Sonden Auskunft gibt. Eine insgesamt mit 18 bezeichnete Ablaufsteuerung ist sowohl mit der Vorrichtung 14 als auch mit der Auswerteschaltung 15 sowie dem Speicher 16 verbunden.

Durch die Ablaufsteuerung wird zum einen bewirkt, dass eine vorzugsweise schnelle definierte Änderung im Abgas, nämlich eine definierte Zuführung von Sekundärluft bewirkt wird, was einer Abmagerung des Kraftstoff-Luftgemisches entspricht. Zugleich wird die Auswerteschaltung 15 für den Schadstoffsensor 12 sowie der Speicher 16 aktiviert, um das aufbereitete Ausgangssignal des Schadstoffsensors 12 am Ausgang der Auswerteschaltung 15 mit einem zuvor gespeicherten, der definierten Änderung des Lambda-Wertes im Abgas entsprechenden Werteprofil in der Vergleichsschaltung 17 zu vergleichen. Stimmen die Werte überein oder liegen sie innerhalb eines vorgebbaren Toleranzbereiches, so kann auf die Funktionsfähigkeit des Katalysators sowie der Lambda-Sonden geschlossen werden. Liegen sie außerhalb, muss von einem Fehler ausgegangen werden.

## Patentansprüche

1. Anordnung zur Überwachung der Funktionsfähigkeit von Katalysatoren (11) in Entgiftungsanlagen für Abgas, wobei in Strömungsrichtung (10) des Abgases hinter dem Katalysator (11) ein Schadstoffsensor (12) angeordnet ist, wobei eine definierte Änderung des Sauerstoffgehaltes im Abgas durch eine Vorrichtung (14) durch schnelles Abmagern durchgeführt wird, wobei das schnelle Abmagern durch Zugabe von Sekundärluft in das Abgas in Strömungsrichtung (10) des Abgases vor dem Katalysator (11) bewirkt wird, wobei das elektrische Ausgangssignal des Schadstoffsensors (12) mit einem in einem Speicher (16) gespeicherten, der definierten Änderung des Lambda-Wertes entsprechende Werteprofil in einer Vergleichsschaltung (17) verglichen wird und wobei als Schadstoffsensor (12) ein HC-Sensor verwendet wird.

2. Anordnung nach Anspruch 1, dadurch gekennzeichnet, daß die definierte Änderung der Zusammensetzung des Abgases beim Abgas von Verbrennungsmotoren von Kraftfahrzeugen durchgeführt wird.

3. Anordnung nach Anspruch 1 oder 2, dadurch gekennzeichnet, daß die Änderung als Zyklus einmal oder zyklisch durchlaufen wird.

4. Anordnung nach einem der Ansprüche 1 bis 3, dadurch gekennzeichnet, daß die definierte Änderung als simulierte Störung des Katalysators durchgeführt wird.

## Revendications

1. Dispositif pour contrôler l'aptitude au fonctionnement de catalyseurs (11) dans des installations de dépollution de gaz d'échappement, dans lequel un capteur (12) de substances nocives est disposé en aval du catalyseur dans la direction de circulation (10) des gaz d'échappement, et dans lequel une modification définie de la teneur en oxygène dans les gaz d'échappement est exécutée par un dispositif (14) au moyen d'un appauvrissement rapide, et dans lequel l'appauvrissement rapide est réalisé par addition d'air secondaire dans les gaz d'échappement en amont du catalyseur (11) dans la direction de circulation (10) des gaz d'échappement, et dans lequel le signal électrique de sortie du capteur (12) de substance nocives est comparé, dans un circuit comparateur (17), à un profil de valeurs, qui est mémorisé dans une mémoire (16) et qui correspond à la variation définie de la valeur lambda et dans lequel on utilise un capteur de HC entant que capteur (12) de substances nocives.

2. Dispositif selon la revendication 1, caractérisé en ce que la modification définie de la composition des gaz d'échappement est exécutée pour des gaz d'échappement de moteurs à combustion interne de véhicules automobiles.

3. Dispositif selon la revendication 1 ou 2, caractérisé en ce que la modification est exécutée une fois ou cycliquement selon un cycle.

4. Dispositif selon l'une des revendications 1 à 3, caractérisé en ce que la variation définie est exécutée en tant que perturbation simulée du catalyseur.

## Claims

1. Arrangement for monitoring the operability of catalytic converters (11) in decontamination plants for waste gas, wherein a pollutant sensor (12) is arranged in flow direction (10) of the waste gas downstream of the catalytic converter (11), wherein a defined change in oxygen content in the waste gas is carried out by a device (14) by rapid weakening, wherein the rapid weakening is effected by adding secondary air to the waste gas in flow direction (10) of the waste gas upstream of the catalytic converter (11), wherein the electrical starting signal of the pollutant sensor (12) is compared in a comparator (17) to a value profile corresponding to the defined change in the lambda value stored in a memory (16), and wherein an HC sensor is used as pollutant sensor (12).

2. Arrangement according to claim 1, characterised in that the defined change in composition of waste gas is carried out for the waste gas of internal combustion engines of motor vehicles.

3. Arrangement according to claim 1 or 2, characterised in that the change as a cycle is passed through once or cyclically.

4. Arrangement according to one of claims 1 to 3, characterised in that the defined change is carried out as a simulated disturbance of the catalytic converter.
